# EUROPEAN PATENT APPLICATION

(11) **EP 4 841 950 A1**
(43) Date of publication of application: **18.11.2026**
(21) Application number: 24915953.4
(22) Date of filing: 09.01.2024
(51) Int. Cl.: H04L 41/16, H04W 24/02

(54) **METHOD FOR SENDING INDICATION INFORMATION, METHOD FOR RECEIVING INDICATION INFORMATION, AND TERMINALS, APPARATUS, SYSTEM AND STORAGE MEDIUM**

(71) Applicant: Beijing Xiaomi Mobile Software Co., Ltd., Beijing 100085 (CN)
(72) Inventor: YANG, Xing, Beijing 100085 (CN)
(74) Representative: Hersina, Günter
(86) International application number: PCT/CN2024/071463
(87) International publication number: WO 2025/147872

(57) **Abstract**

The present disclosure relates to a method for sending indication information, a method for receiving indication information, and terminals, an apparatus, a system and a storage medium. The method for receiving indication information comprises: receiving first indication information sent by a network device, the first indication information being used for indicating a terminal behavior of a terminal in managing an AI model or an AI function. In the method of the present disclosure, a terminal receives first indication information to learn of a UE behavior indicated by a network device, so that an adaptive operation can be performed during the process of the terminal managing an AI model or AI function, thereby facilitating an improvement to the rationality of the terminal managing the AI model or AI function when the terminal has reached a consensus with the network device by means of negotiation.

## Description

### TECHNICAL FIELD

The present disclosure relates to the field of communication technology, and particularly to a method for sending and receiving indication information, a terminal, an apparatus, a system and a storage medium.

### BACKGROUND

Artificial Intelligence (AI) technology may be applied to a wide range of technical fields. Machine learning algorithms are one of the most important methods of implementing AI. Machine learning uses large amounts of training data to obtain models, which can then be used to predict events and generate accurate predictions. In wireless communication networks, AI technology may be applied for prediction and inference to enhance the performance of communication systems.

### SUMMARY

In wireless communication systems, it is necessary to solve the problem of how to manage AI-related models or functionalities.

Embodiments of the present disclosure provide a method for sending and receiving indication information, a terminal, an apparatus, a system and a storage medium.

In a first aspect, embodiments of the present disclosure provide a method for receiving indication information, performed by a terminal, including:
receiving first indication information sent by a network device, in which the first indication information indicates a terminal behavior of the terminal for managing an artificial intelligence (AI) model or an AI functionality.

In a second aspect, embodiments of the present disclosure provide a method for sending indication information, performed by a network device, including:
sending first indication information to a terminal, in which the first indication information indicates a terminal behavior of the terminal for managing an artificial intelligence (AI) model or an AI functionality.

In a third aspect, embodiments of the present disclosure provide a terminal, including:
a transceiver module configured to receive first indication information sent by a network device, in which the first indication information indicates a terminal behavior of the terminal for managing an artificial intelligence (AI) model or an AI functionality.

In a fourth aspect, embodiments of the present disclosure provide a network device, including:
a transceiver module configured to send first indication information to a terminal, in which the first indication information indicates a terminal behavior of the terminal for managing an artificial intelligence (AI) model or an AI functionality.

In a fifth aspect, embodiments of the present disclosure provide a terminal, including:
one or more processors,
in which the terminal is configured to perform the method according to the first aspect.

In a sixth aspect, embodiments of the present disclosure provide a network device, including:
one or more processors,
in which the network device is configured to perform the method according to the second aspect.

In a seventh aspect, embodiments of the present disclosure provide a communication system, including a terminal and a network device, in which
the terminal is configured to implement the method according to the first aspect; and
the network device is configured to implement the method according to the second aspect.

In an eighth aspect, embodiments of the present disclosure provide a storage medium storing instructions that, when executed on a communication device, cause the communication device to perform the method according to the first aspect or the second aspect.

In the embodiments of the present disclosure, the terminal learns a UE behavior indicated by the network device by receiving the first indication information, such that adaptive operations may be performed during the process of managing the AI model or AI functionality by the terminal, which facilitates improving the rationality and effectiveness of the terminal's management of AI model or AI functionality in coordination with the network device.

### BRIEF DESCRIPTION OF THE DRAWINGS

In order to clearly illustrate technical solutions in the embodiments of the present disclosure, the drawings required for describing the embodiments are introduced as follows. The following drawings merely describe some embodiments of the present disclosure, and do not intend to be a specific limitation on the scope of protection of the present disclosure.
FIG. 1 is a schematic diagram illustrating an architecture of a communication system according to embodiments of the present disclosure.
FIG. 2a to FIG. 2b are an interactive schematic diagram illustrating a method according to embodiments of the present disclosure.
FIG. 3a to FIG. 3d are a flowchart illustrating a method according to embodiments of the present disclosure.
FIG. 4a to FIG. 4d are a flowchart illustrating a method according to embodiments of the present disclosure.
FIG. 5a is a block diagram illustrating a terminal according to embodiments of the present disclosure.
FIG. 5b is a block diagram illustrating a network device according to embodiments of the present disclosure.
FIG. 6a is a schematic diagram illustrating a communication device according to embodiments of the present disclosure.
FIG. 6b is a schematic diagram illustrating a communication device according to embodiments of the present disclosure.

### DETAILED DESCRIPTION

Embodiments of the present disclosure provide a method for sending and receiving indication information, a terminal, an apparatus, a system and a storage medium.

In a first aspect, embodiments of the present disclosure provide a method for receiving indication information, performed by a terminal, including:
receiving first indication information sent by a network device, in which the first indication information indicates a terminal behavior of the terminal for managing an artificial intelligence (AI) model or an AI functionality.

In the above embodiments of the present disclosure, the terminal learns a UE behavior indicated by the network device by receiving the first indication information, such that adaptive operations may be performed during the process of managing the AI model or AI functionality by the terminal, which facilitates improving the rationality and effectiveness of the terminal in managing the AI model or AI functionality under the condition of reaching a consensus through negotiation with the network device.

In combination with the embodiment of the first aspect, in some embodiments, the first indication information includes at least one of:
an identifier of at least one AI model;
an identifier of at least one AI functionality; or
an identifier of at least one AI application scenario.

At least one of the following is satisfied among an AI model, an AI functionality and an AI application scenario:
the AI functionality being associated with one or more AI models;
the AI application scenario being associated with one or more AI models; or
the AI application scenario being associated with one or more AI functionalities.

In the above embodiments, based on the received first indication information, the terminal may learn the identifier of the model, the identifier of the functionality or the identifier of the scenario indicated by the network device, such that the terminal may perform a corresponding terminal behavior when managing the model corresponding to the first indication information.

In combination with the embodiments of the first aspect, in some embodiments, the AI functionality corresponds to one or more AI models that implement the same functionality.

In the above embodiments, the terminal may manage the associated model or functionality at an appropriate timing based on the association between the AI functionality and the AI model, in accordance with the first indication information.

In combination with the embodiments of the first aspect, in some embodiments, the AI application scenario includes at least one of:
a beam management;
a beam measurement;
a channel state information (CSI) reporting;
a terminal positioning;
a mobility management; or
a radio resource measurement.

In the above embodiments, in different communication scenarios, the terminal may manage a model or a functionality at an appropriate timing based on the first indication information, thereby improving the utilization effect of the model or the functionality.

In combination with the embodiments of the first aspect, in some embodiments, the method further includes:
in a case where the terminal selects a first AI model or a first AI functionality, determining, by the terminal, the terminal behavior according to the first AI model or the first AI functionality and the first indication information, in which the first AI model is one of AI models supported by the terminal, or the first AI functionality is one of AI functionalities supported by the terminal.

In the above embodiments, the terminal may make a decision on the selected AI model or functionality based on the first indication information, and determine an appropriate terminal behavior to negotiate with the network device to determine a suitable management operation.

In combination with the embodiments of the first aspect, in some embodiments, determining, by the terminal, the terminal behavior according to the first AI model or the first AI functionality and the first indication information includes:
in a case where the first AI model or the first AI functionality matches an identifier in the first indication information, sending, by the terminal, second indication information to the network device, in which the second indication information indicates an identifier corresponding to the first AI model or the first AI functionality, and/or a management operation on the first AI model or the first AI functionality.

In the above embodiments, in a case where the AI model or the AI functionality selected by the terminal matches the first indication information, the terminal may send the second indication information to promptly report a management indication to the network device, facilitating subsequent appropriate management operations.

In combination with the embodiments of the first aspect, in some embodiments, the method further includes:
performing, by the terminal, the management operation indicated by the second indication information on the first AI model or the first AI functionality.

In combination with the embodiments of the first aspect, in some embodiments, determining, by the terminal, the terminal behavior according to the first AI model or the first AI functionality and the first indication information includes:
in a case where the first AI model or the first AI functionality matches an identifier in the first indication information, sending, by the terminal, request information to the network device, in which the request information indicates an identifier corresponding to the first AI model or the first AI functionality, and/or a management operation requested by the terminal; and
receiving third indication information sent by the network device, in which the third indication information indicates an identifier corresponding to a second AI model or a second AI functionality that the terminal is allowed to manage, and/or a management operation that the terminal is allowed to perform on the second AI model or the second AI functionality,
in which the second AI model is the same as or different from the first AI model, or the second AI functionality is the same as or different from the first AI functionality.

In the above embodiments, in a case where the AI model or the AI functionality selected by the terminal matches the first indication information, the terminal may send the request information to promptly request the management indication from the network device.

In combination with the embodiments of the first aspect, in some embodiments, the method further includes:
performing, by the terminal, the management operation indicated by the third indication information on the second AI model or the second AI functionality.

In the above embodiments, after sending the management request, the terminal may perform the management operation on the model or function according to the third indication information from the network device, thereby managing the model or the functionality under the indication of the network device.

In combination with the embodiments of the first aspect, in some embodiments, the management operation includes at least one of:
enabling of the AI model or the AI functionality;
disabling of the AI model or the AI functionality; or
switching of the AI model or the AI functionality.

In the above embodiments, the management of the model or the functionality by the terminal includes enabling, disabling or switching. Under the indication or permission of the network device, the terminal may perform appropriate management operations at an appropriate timing.

In combination with the embodiments of the first aspect, in some embodiments, the method further includes:
sending assistance information to the network device, in which the assistance information includes a correspondence among an AI model, an AI functionality and an AI application scenario; or
receiving configuration information sent by the network device, in which the configuration information includes a correspondence among an AI model, an AI functionality and an AI application scenario.

In the above embodiments, the terminal may independently determine the correspondence among the AI model, the AI functionality and the AI application scenario and report the correspondence to the network device. Alternatively, the terminal receives the correspondence configured by the network device, and may perform adaptive processing on the associated model, functionality or scenario based on the correspondence.

In a second aspect, embodiments of the present disclosure provide a method for sending indication information, performed by a network device, including:
sending first indication information to a terminal, in which the first indication information indicates a terminal behavior of the terminal for managing an artificial intelligence (AI) model or an AI functionality.

In the above embodiments, the network device sends the first indication information to indicate the available UE behaviour to the terminal, such that an adaptive operation may be performed in the process of the terminal managing the AI model or AI functionality, thereby improving the rationality and effectiveness of the terminal's management of the AI model or AI functionality in coordination with the network device.

In combination with the embodiments of the second aspect, in some embodiments, the first indication information includes at least one of:
an identifier of at least one AI model;
an identifier of at least one AI functionality; or
an identifier of at least one AI application scenario.

In combination with the embodiments of the second aspect, in some embodiments, at least one of the following is satisfied among an AI model, an AI functionality and an AI application scenario:
the AI functionality being associated with one or more AI models;
the AI application scenario being associated with one or more AI models; or
the AI application scenario being associated with one or more AI functionalities.

In combination with the embodiments of the second aspect, in some embodiments, the AI functionality corresponds to one or more AI models that implement the same functionality.

In combination with the embodiments of the second aspect, in some embodiments, the AI application scenario includes at least one of:
a beam management;
a beam measurement;
a channel state information (CSI) reporting;
a terminal positioning;
a mobility management; or
a radio resource measurement.

In combination with the embodiments of the second aspect, in some embodiments, the method further includes:
receiving second indication information sent by the terminal, in which the second indication information is sent in a case where a first AI model or a first AI functionality matches an identifier in the first indication information; the second indication information indicates an identifier corresponding to the first AI model or the first AI functionality, and/or a management operation on the first AI model or the first AI functionality; and
in which the first AI model is one of AI models supported by the terminal, or the first AI functionality is one of AI functionalities supported by the terminal.

In combination with the embodiments of the second aspect, in some embodiments, the method further includes:
receiving request information sent by the terminal, in which the request information is sent in a case where a first AI model or a first AI functionality matches an identifier in the first indication information, and the request information indicates an identifier corresponding to the first AI model or the first AI functionality, and/or a management operation requested by the terminal; and
sending third indication information to the terminal, in which the third indication information indicates an identifier corresponding to a second AI model or a second AI functionality that the terminal is allowed to manage, and/or a management operation that the terminal is allowed to perform on the second AI model or the second AI functionality,
in which the second AI model is the same as or different from the first AI model, or the second AI functionality is the same as or different from the first AI functionality.

In combination with the embodiments of the second aspect, in some embodiments, the management operation includes at least one of:
enabling of the AI model or the AI functionality;
disabling of the AI model or the AI functionality; or
switching of the AI model or the AI functionality.

In combination with the embodiments of the second aspect, in some embodiments, the method further includes:
receiving assistance information sent by the terminal, in which the assistance information includes a correspondence among an AI model, an AI functionality and the AI application scenario; or
sending configuration information to the terminal, in which the configuration information includes a correspondence among an AI model, an AI functionality and an AI application scenario.

In a third aspect, embodiments of the present disclosure provide a terminal, including:
a transceiver module configured to receive first indication information sent by a network device, in which the first indication information indicates a terminal behavior of the terminal for managing an artificial intelligence (AI) model or an AI functionality.

In a fourth aspect, embodiments of the present disclosure provide a network device, including:
a transceiver module configured to send first indication information to a terminal, in which the first indication information indicates a terminal behavior of the terminal for managing an artificial intelligence (AI) model or an AI functionality.

In a fifth aspect, embodiments of the present disclosure provide a terminal, including:
one or more processors,
in which the terminal is configured to perform the method according to the first aspect.

In a sixth aspect, embodiments of the present disclosure provide a network device, including:
one or more processors,
in which the network device is configured to perform the method according to the second aspect.

In a seventh aspect, embodiments of the present disclosure provide a communication system, including a terminal and a network device, in which
the terminal is configured to implement the method according to the first aspect; and
the network device is configured to implement the method according to the second aspect.

In an eighth aspect, embodiments of the present disclosure provide a storage medium storing instructions, in which,
when the instructions are executed on a communication device, they cause the communication device to perform the method according to the first aspect or the second aspect.

In a ninth aspect, embodiments of the present disclosure provide a program product, which when executed by a communication device, causes the communication device to perform the method described in the optional implementations of the first aspect and the second aspect.

In a tenth aspect, embodiments of the present disclosure provide a computer program which, when run on a computer, causes the computer to perform the method described in the optional implementations of the first aspect and the second aspect.

In an eleventh aspect, embodiments of the present disclosure provide a chip or a chip system. The chip or chip system includes a processing circuit configured to perform the method described in the optional implementations of the first aspect and the second aspect.

It may be understood that the above terminal, network device, communication system, storage medium, program product, computer program, chip or chip system are all configured to perform the method provided in embodiments of the present disclosure. Therefore, the advantageous effects thereof may be achieved by referring to the advantageous effects in the corresponding method, which will not be described in detail herein.

Embodiments of the present disclosure are not exhaustive, but are merely illustrative of some embodiments, and are not intended to be a specific limitation on the scope of protection of the present disclosure. In the absence of contradictions, each step in a certain embodiment may be implemented as an independent embodiment, and the steps may be arbitrarily combined, for example, a solution in which some steps are removed in a certain embodiment may also be implemented as an independent embodiment, and the order of each step in a certain embodiment may be arbitrarily exchanged, and further, optional implementations in a certain embodiment may be arbitrarily combined. Furthermore, various embodiments may be arbitrarily combined, for example, some or all steps of different embodiments may be arbitrarily combined, and a certain embodiment may be arbitrarily combined with optional implementations of other embodiments.

In each embodiment of the present disclosure, if there is no special description and logical conflict, the terms and/or descriptions among the embodiments are consistent and may be referenced to each other, and technical features in different embodiments may be combined to form new embodiments according to their intrinsic logical relationships.

The terms used in embodiments of the present disclosure is for the purpose of describing specific embodiments only, and is not intended to limit the present disclosure.

In embodiments of the present disclosure, unless otherwise specified, elements represented in the singular form, such as "a", "an", "the", "above", "said", "preceding", "this", and the like, may represent "one and only one", or may represent "one or more", "at least one", and the like. For example, in a case where an article such as "a", "an", and "the", in English is used in translation, a noun after the article may be understood as a singular expression or a plural expression.

In embodiments of the present disclosure, "multiple" refers to two or more.

In some embodiments, terms such as "at least one of", "one or more", "a plurality of", "multiple", may be replaced with each other.

In some embodiments of the present disclosure, descriptions such as "at least one of A or B", "A and/or B", "A in one case and B in another", "in response to one case A and in response to another case B" may include the following technical solutions depending on the situation: in some embodiments A (A is executed regardless of B); in some embodiments B (B is executed regardless of A); in some embodiments, execution is selected from A and B (A and B are selectively executed); in some embodiments A and B (both A and B are executed). The same applies when there are more branches such as A, B, and C.

In some embodiments of the present disclosure, descriptions such as "A or B" may include the following technical solutions depending on the situation: in some embodiments A (A is executed regardless of B); in some embodiments B (B is executed regardless of A); in some embodiments, execution is selected from A and B (A and B are selectively executed). The same applies when there are more branches such as A, B, and C.

The prefix words such as "first" and "second" in embodiments of the present disclosure are only for distinguishing different description objects, and do not constitute restrictions on the position, order, priority, quantity, content, etc. of the description objects. For statements of the description objects, please refer to the description of the context in the claims or the embodiments, and should not constitute unnecessary restrictions due to the use of the prefix words. For example, if the description object is a "field", the ordinal number before the "field" in the "first field" and the "second field" does not limit the position or order between the "fields", and "first" and "second" do not limit whether the "fields" modified by them are in the same message, nor do they limit the order of the "first field" and the "second field". For another example, if the description object is "rank", the ordinal number before "rank" in "first rank" and "second rank" does not limit the priority between "rank". For another example, the number of description objects is not limited by ordinal numbers, and may be one or more. Taking "first device" as an example, the number of "devices" may be one or more. Furthermore, objects modified by different prefixes may be the same or different, for example, if the description object is the "device", the "first device" and the "second device" may be the same device or different devices, and the types thereof may be the same or different. For another example, when the description object is "information", the "first information" and the "second information" may be the same information or different information, and the contents thereof may be the same or different.

In some embodiments, terms such as "including A", "containing A", "for indicating A", "carrying A", may be interpreted as directly carrying A, or may be interpreted as indirectly indicating A.

In some embodiments, terms such as "in response to", "in response to determining", "in a case where", "when", "upon", "if", and the like may be replaced with each other.

In some embodiments, terms such as "greater than", "greater than or equal to", "not smaller than", "more than", "more than or equal to", "not lower than", "higher", "higher than or equal to", "not less than", "above" and the like may be replaced with each other, and terms such as "smaller than", "smaller than or equal to", "not greater than", "less than", "less than or equal to", "not more than", "lower than", "lower than or equal to", "not higher than", "below" and the like may be replaced with each other.

In some embodiments, the apparatus and the device may be interpreted as physical or virtual, and the names thereof are not limited to those described in embodiments. Terms such as "apparatus", "equipment", "device", "circuit", "network element", "node", "function", "unit", "section", "system", "network", "chip", "chip system", "entity", "body" and the like may be replaced with each other.

In some embodiments, the "network" may be interpreted as an apparatus included in the network, for example, an access network device, a core network device and the like.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell" "carrier", "component carrier", "bandwidth part (BWP)" and the like may be replaced with each other.

In some embodiments, terms such as "terminal", "terminal device", "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client and the like may be replaced with each other.

In some embodiments, obtaining data, information and the like may comply with laws and regulations of the country where it is located.

In some embodiments, data, information and the like may be obtained after obtaining the user's consent.

Further, each element, each row, or each column in the table of the embodiments of the present disclosure may be implemented as an independent embodiment, and any combination of any element, any row, or any column may also be implemented as an independent embodiment.

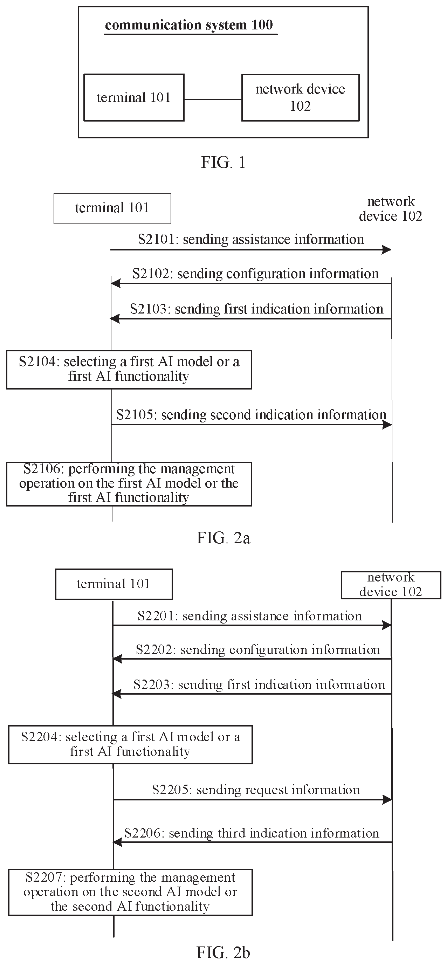

FIG. 1 is a schematic diagram illustrating an architecture of a communication system according to embodiments of the present disclosure.

As shown in FIG. 1, a communication system 100 includes a terminal 101 and a network device 102.

In some embodiments, the terminal 101 includes, for example, at least one of a mobile phone, a wearable device, an Internet of Things device, an automobile with a communication function, a smart car, a pad, a computer with a wireless transmission and reception function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, and a wireless terminal device in smart home, which is not limited in the present disclosure.

In some embodiments, in a case where the network device 102 is a network device, the network device may include at least one of an access network device or a core network device.

In some embodiments, the access network device is, for example, a node or device that accesses a terminal to a wireless network, and the access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a radio backhaul device, a radio network controller (RNC), a base station controller (BSC), a base transceiver station (BTS), a base band unit (BBU), a mobile switching center, a base station in a 6G communication system, an open base station (RAN), a cloud base station (Cloud RAN), a base station in another communication system, and an access node in a wireless fidelity (WiFi) system, which is not limited in the present disclosure.

In some embodiments, the technical solution of the present disclosure may be applied to an Open RAN architecture. Moreover, an interface between or within the access network device in the embodiments of the present disclosure may be changed to an internal interface of an Open RAN, and the flow and information interaction between the internal interfaces may be implemented by software or a program.

In some embodiments, the access network device may be composed of a central unit (CU) and a distributed unit (DU), in which the CU may also be referred to as a control unit, and the protocol layer of the access network device may be separated by adopting the structure of the CU-DU, some functions of the protocol layer are centrally controlled by the CU, and some or all functions of the remaining protocol layer are distributed in the DU, and the DU is centrally controlled by the CU, but is not limited in the embodiments of the present disclosure.

In some embodiments, the core network device may be one device including one or more network elements, or may be a plurality of devices or a group of devices including all or part the aforementioned one or more network elements respectively. The network element may be virtual or physical. The core network includes, for example, at least one of an evolved packet core (EPC), a 5G core network (5GCN), or a next generation core (NGC). Alternatively, the core network device refers to a network element with a specific function, such as an access management function (AMF), a service management function (SMF), and the like.

It may be understood that the communication system described in the embodiments of the present disclosure is to more clearly explain the technical solution of the embodiments of the present disclosure, and does not constitute a limitation on the technical solution provided by the embodiments of the present disclosure. As those skilled in the art know, with the evolution of the system architecture and the emergence of new business scenarios, the technical solution provided by the embodiments of the present disclosure is applicable to similar technical problems.

The following embodiments of the present disclosure may be applied to the communication system 100 illustrated in FIG. 1 or a part of the body, which is not limited in the embodiments of the present disclosure.

Each body shown in FIG. 1 is an example, and the communication system may include all or some of the bodies shown in FIG. 1, or other bodies other than those shown in FIG. 1. The number and form of the bodies are arbitrary, the connection relationship between the bodies is an example, the bodies may not be connected or connected, and the connection may be any form, including direct connection or indirect connection, wired connection or wireless connection.

Embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), and IEEE 802.20, ultra-wideband (UWB), Bluetooth (registered trademark), public land mobile network (PLMN) networks, device-to-device (D2D) systems, machine-to-machine (M2M) systems, Internet of Things (IoT) systems, vehicle-to-everything (V2X) systems, systems utilizing other communication methods, and next-generation systems built upon them and the like. Moreover, multiple systems may be combined (e.g., a combination of LTE or LTE-A with 5G) for application.

In the embodiments of the present disclosure, in an AI-based wireless communication system, training of an AI model requires the collection of large amounts of data, and the data requirements vary depending on the application scenario. Terminal 101 it may support multiple AI models or AI functionalities, therefore, it is necessary to address the issue of how terminal 101 manages the AI-related models or functionalities.

FIG. 2a is an interactive schematic diagram illustrating a method for receiving and sending indication information according to embodiments of the present disclosure. As shown in FIG. 2a, embodiments of the present disclosure relate to a method for receiving and sending indication information, and the method includes the following steps.

In step S2101, a terminal 101 sends assistance information to a network device 102.

In some embodiments, the assistance information includes a correspondence or mapping relationship among an AI model, an AI functionality and an AI application scenario.

In some embodiments, an AI functionality is associated with one or more AI models, and the one or more AI models are used to implement a specific functionality. Alternatively, an AI functionality corresponds to one or more AI models, in which the one or more AI models may be used to implement a function, that is, to implement the same functionality. Alternatively, one or more AI models that implement the same function are collectively referred to as an AI functionality.

In some embodiments, an AI application scenario is associated with one or more AI models, or an AI application scenario is associated with one or more AI functionalities. The one or more AI models or AI functionalities are applied to the AI application scenario.

In some embodiments, the AI application scenario includes at least one of:
a beam management;
a beam measurement;
a channel state information (CSI) reporting;
a terminal positioning;
a mobility management; or
a radio resource measurement.

In some embodiments, the above AI application scenarios are merely illustrative and not intended to be limiting, and may further include, for example, cell handover, radio resource management, and other mobile communication system processes.

During an AI-based beam management process, terminal 101 may reduce the number of beams measured, and terminal 101 or network device 102 obtains an optimal beam through AI inference. Beam prediction in beam management includes spatial-domain beam prediction and time-domain beam prediction. In the spatial-domain beam prediction, terminal 101 measures a small number of beams and predicts the measurement results of other beams. In the time-domain beam prediction, terminal 101 predicts future beam measurement results based on historical beam measurement results.

During an AI-based CSI reporting process, terminal 101 may perform AI model-based CSI compression by compressing a CSI measurement result using AI, and then report the compressed CSI measurement result to the network device 102. After receiving the CSI measurement results, network device 102 uses an AI model to reconstruct the original CSI measurement results. The AI-based CSI reporting process reduces the number of signaling bits required during the reporting process. Network device 102 may also predict future CSI based on historical CSI measurement results reported by terminal 101.

During an AI-based positioning process, terminal 101 may predict a precise location based on a limited set of measurement results.

During an AI-based mobility process, terminal 101 may predict a handover to a target cell or a mobility event.

In some embodiments, for any AI application scenario, the AI model or AI functionality must be trained using training data specific to that scenario during the training phase. During the use and inference of the AI model or AI functionality, multiple AI models or AI functionalities may be required to perform inference and prediction. Therefore, for a terminal 101 that supports multiple AI models or AI functionalities, it is necessary to effectively manage the AI models or AI functionalities.

In some embodiments, the network device 102 receives the assistance information to learn the correspondence supported by the terminal 101.

In some embodiments, step S2101 is applicable to the implementation where the terminal 101 independently determines the above correspondence. In some embodiments, step S2101 may be omitted. For example, in a case where the terminal 101 obtains the correspondence through step S2102, step S2101 may be omitted.

In step S2102, the network device 102 sends configuration information to the terminal 101.

In some embodiments, the configuration information includes the correspondence among the AI model, the AI functionality, and the AI application scenario.

In some embodiments, for this correspondence, reference may be made to the implementation of step S2102, which will not be described in detail herein.

In some embodiments, the network device 102 may send the configuration information via radio resource control (RRC).

In some embodiments, the terminal 101 receives the above configuration information to learn the correspondence.

In some embodiments, step S2102 is applicable to the implementation where the network device 102 configures the correspondence for the terminal 101. In some embodiments, step S2102 may be omitted. For example, in a case where the terminal 101 determines the correspondence through step S2101, step S2102 may be omitted.

In step S2103, the network device 102 sends first indication information to the terminal 101.

In some embodiments, the first indication information indicates a terminal behavior of the terminal 101 for managing the AI model or AI functionality.

For example, the terminal behavior may include a behavior of terminal 101 after deciding to manage the AI model or AI functionality but before executing a specific management operation. Alternatively, the terminal behavior may include an operation of the terminal 101 after deciding to manage the AI model or AI functionality, as well as the specific management operation.

In some embodiments, terminal 101's management of the AI model or AI functionality may include using the AI model or AI functionality, or may include choosing not to use a certain AI model or AI functionality.

In some embodiments, terminal 101's management operation on the AI model or AI functionality includes one of: enabling of the AI model or the AI functionality; disabling of the AI model or the AI functionality; or switching of the AI model or the AI functionality.

In some embodiments, enabling of the AI model or AI functionality may be activating the AI model or the AI functionality, and disabling may be deactivating the AI model or the AI functionality. For example, after activating a certain AI model or AI functionality, the terminal 101 may use or apply the AI model or the AI functionality; after deactivating a certain AI model or the AI functionality, the terminal 101 may consider the AI model or the AI functionality invalid; in a case of performing the switching of the AI model or the AI functionality, the terminal 101 may adjust from using or applying one AI model or AI functionality to using or applying another AI model or AI functionality.

In some embodiments, in a case where methods for the terminal 101 to manage the AI model or the AI functionality are different, different terminal behaviors may be determined based on the first indication information.

In some embodiments, the methods by which terminal 101 manage the AI model or the AI functionality include the following two approaches: network-decided and terminal-decided . The terminal's behavior differs between the two approaches.

In an example, the network-decided approach includes the following two options: First, the network device 102 sends the configuration information, such as configuration related to performing measurements or reporting; terminal 101 reports assistance information to network device 102, and the assistance information may include the measurements. The network device 102 sends a management instruction to the terminal 101, indicating the AI model or the AI functionality to be used by the terminal 101. Second, the network device 102 sends the configuration information, such as configuration related to performing measurements or reporting; the terminal 101 may decide how to manage the AI model or the AI functionality, and send a management request to the network device 102. Upon receiving the management request, the network device 102 issues the management instruction, and the terminal 101 determines the AI model or AI functionality to be used based on the management instruction.

In another example, the terminal-decided approach includes the following three options: First, the network device 102 sends the configuration information, such as the configuration for performing measurements and conditions for event triggering for AI management; in a case where the configured conditions for the AI management are met, the terminal 101 automatically determines the AI model or the AI functionality to be used, and reports the management result, that is, a management decision report, to the network device 102. Second, the network device 102 sends the configuration information, such as the configuration for the terminal 101 to report a management decision, the terminal 101 independently determines the AI model or AI functionality to be used, and then reports the management decision to the network device 102. Third, the terminal 101 independently determines the AI model or the AI functionality to be used, and does not report the management decision.

In some embodiments, the terminal 101 may perform appropriate operations or select an appropriate mode for the AI management based on the first indication information. For example, the first indication information may indicate a timing for the terminal 101 to send the management indication, such as the terminal 101 sending the management indication in the terminal-decided mode; for another example, the first indication information may indicate a timing for the terminal 101 to send the management request, such as the terminal 101 sending the management request in the network-decided mode.

In some embodiments, the first indication information includes at least one of:
an identifier of at least one AI model;
an identifier of at least one AI functionality; or
an identifier of at least one AI application scenario.

In some embodiments, at least one of the following is satisfied among an AI model, an AI functionality and an AI application scenario:
the AI functionality being associated with one or more AI models;
the AI application scenario being associated with one or more AI models; or
the AI application scenario being associated with one or more AI functionalities.

In some embodiments, for the correspondence among the AI model, the AI functionality and the AI application scenario, reference may be made to the description in the foregoing embodiments.

In some embodiments, each AI model corresponds to an ID, and each AI functionality also corresponds to a corresponding ID. The AI functionality may be a set of AI models for a specific functionality.

In some embodiments, before the network device 102 sends the first indication information, the terminal 101 may report the AI model or the AI functionality supported by itself through capability information or the assistance information, such that the network device 102 may learn the AI model or the AI functionality supported by the terminal 101. Through a model identification procedure, the terminal 101 and the network device 102 may reach a unified understanding of the performance and architecture parameters of the model. The terminal 101 may send meta data of a terminal-side model to the network device 102, and the network device 102 may also send meta data of a network-side model to the terminal 101. The meta data may include the performance, architecture, parameters, identifier and the like of the corresponding model.

In some embodiments, the terminal 101 receives the first indication information and, based on an identifier indicated by the first indication information, may perform appropriate operations in a case of applying a model indicated by the first indication information.

In step S2104, the terminal 101 selects a first AI model or a first AI functionality.

In some embodiments, that the terminal 101 selects the first AI model or the first AI functionality may mean that the terminal decides to manage the first AI model or the first AI functionality, but has not yet executed a specific management operation.

In some embodiments, the first AI model is one of multiple AI models supported by the terminal, or the first AI functionality is one of multiple AI functionalities supported by the terminal.

In some embodiments, the first AI model and the first AI functionality may be the same as or different from the AI model or the AI functionality indicated in the first indication information.

In some embodiments, based on the description of the foregoing embodiments, after the terminal 101 decides to manage the first AI model or the first AI functionality, the management mode may be the network-decided approach or the terminal-decided approach.

In step S2105, the terminal 101 sends second indication information to the network device 102.

In some embodiments, the step S2105 is executed in a case where the first AI model or the first AI functionality matches the identifier in the first indication information, that is, the first AI model or the first AI functionality belongs to the AI model or AI functionality indicated or bound by the first indication information.

In some embodiments, step S2105 corresponds to a terminal behavior indicated by the first indication information.

In some embodiments, the second indication information indicates an identifier corresponding to the first AI model or the first AI functionality, and/or a management operation on the first AI model or the first AI functionality.

In some embodiments, in a case where the terminal 101 only supports one management operation, the terminal 101 may not report the management operation in the second indication information, and the supported management operation will be adopted by default.

In some embodiments, the second indication information may also be referred to as a management indication or a management decision. For example, in the terminal-decided approach, the terminal 101 may send the second indication information to the network device 102.

In some embodiments, the management operation includes at least one of:
enabling of the AI model or the AI functionality;
disabling of the AI model or the AI functionality; or
switching of the AI model or the AI functionality.

In some embodiments, the terminal 101 reports the determined or selected management operation, and/or the identifier of the first AI model or the first AI functionality in the second indication information.

In some embodiments, the network device 102 receives the second indication information to learn the identifier of the first AI model or the first AI functionality selected by the terminal 101, and/or the management operation determined by the terminal 101 for the first AI model or the first AI functionality.

In some embodiments, in a case where the first AI model or the first AI functionality does not match the identifier in the first indication information, for example, if it does not belong to the AI model or the AI functionality indicated by the first indication information or if the first AI model or the first AI functionality differs from a model bound to the application scenario in the first indication information, the terminal 101 may refrain from sending the second indication information.

In step S2106, the terminal 101 performs the management operation on the first AI model or the first AI functionality.

In some embodiments, this step may also be executed before step S2105.

In some embodiments, the management operation of the terminal 101 may be determined by itself, as recorded in the second indication information.

In some embodiments, steps S2105 and S2106 correspond to the terminal behavior indicated by the first indication information.

In some embodiments, with reference to the description of the foregoing embodiments or the following embodiments, the management operation of the terminal 101 on the first AI model or the first AI functionality includes but is not limited to at least one of: enabling (i.e., using) of the first AI model or the first AI functionality, disabling of the AI model or the AI functionality, and switching of the AI model or the AI functionality.

In some embodiments, the names of information and the like are not limited to the names described in embodiments. Terms such as "information", "message", "signal", "signaling", "report", "configuration", "indication", "instruction", "command", "channel", "parameter", "field", "field" may be replaced with each other.

In some embodiments, terms such as "acquire", "obtain", "get", "receive", "transmit", "bidirectional transmission", "send and/or receive" may be replaced with each other, and these terms may be interpreted as having multiple meanings including receiving from another entity, obtaining from a protocol, obtaining from a higher layer, obtaining from a self-processing, implementing autonomously and the like.

In some embodiments, terms such as "send", "transmit", "report", "deliver", "transmit", "bidirectional transmission", "send and/or receive" may be replaced with each other.

In some embodiments, terms such as "radio", "wireless", "radio access network (RAN)", "access network (AN)", and "RAN-based" may be replaced with each other.

In some embodiments, terms such as "time instant", "time point", "time", "time location" may be replaced with each other, and terms such as "time duration", "time period", "time window", "window", "time" may be replaced with each other.

In some embodiments, terms such as "component carrier (CC)", "cell", "frequency carrier", "carrier frequency" may be replaced with each other.

In some embodiments, terms such as "certain", "preset", "predefined", "set", "indicated", "a given", "arbitrary", and "first" may be replaced with each other. "Certain A", "preset A", "predefined A", "set A", "indicated A", "a given A", "arbitrary A", and "first A" may be interpreted as A specified in advance in protocols or the like, may also be interpreted as A obtained through setting, configuration, or indication, and may further be interpreted as a certain A, a given A, an arbitrary A, or a first A, which is not limited in embodiments of the present disclosure.

In some embodiments, the determination or judgment may be performed using a 1-bit value (0 or 1), may also be performed using a true/false value (boolean) represented by "true" or "false", and may further be performed through numerical comparison (for example, comparison with a preset value), which is not limited in embodiments of the present disclosure.

In some embodiments, "not expecting to receive" may be interpreted as not receiving data on a time domain resources and/or a frequency domain resource, or may be interpreted as not performing subsequent processing on the data or the like after receiving the data or the like. "Not expecting to send" may be interpreted as not sending, or may be interpreted as sending but not expecting the receiver to respond to the sent content.

The method involved in embodiments of the present disclosure may include at least one of step S2101 to step S2106. For example, the method includes step S2103, or the method includes steps S2103 to S2105.

In some embodiments, at least one of steps S2101 to S2102 is optional, and one or more of these steps may be omitted or replaced in different embodiments.

In some embodiments, at least one of steps S2104 to S2106 is optional, and one or more of these steps may be omitted or replaced in different embodiments.

In some embodiments, reference may be made to other optional implementations recorded before or after the specification corresponding to FIG. 2a.

FIG. 2b is an interactive schematic diagram illustrating a method for receiving and sending indication information according to embodiments of the present disclosure. As shown in FIG. 2b, embodiments of the present disclosure relate to a method for receiving and sending indication information, and the method includes the following steps.

In step S2201, a terminal 101 sends assistance information to a network device 102.

In some embodiments, the implementation of step S2201 may refer to the optional implementations of step S2101, which will not be repeated here.

In step S2202, the network device 102 sends configuration information to the terminal 101.

In some embodiments, the implementation of step S2202 may refer to the optional implementations of step S2102, which will not be repeated here.

In step S2203, the network device 102 sends first indication information to the terminal 101.

In some embodiments, the implementation of step S2203 may refer to the optional implementations of step S2103, which will not be repeated here.

In step S2204, the terminal 101 selects a first AI model or a first AI functionality.

In some embodiments, the implementation of step S2204 may refer to the optional implementations of step S2104, which will not be repeated here.

In step S2205, the terminal 101 sends request information to the network device 102.

In some embodiments, step S2205 is executed in a case where the first AI model or the first AI functionality matches an identifier in the first indication information, that is, the first AI model or the first AI functionality belongs to an AI model or an AI functionality indicated or bound by the first indication information.

In some embodiments, step S2205 corresponds to a terminal behavior indicated by the first indication information.

In some embodiments, the request information indicates an identifier corresponding to the first AI model or the first AI functionality, and/or a management operation requested by the terminal.

In some embodiments, in a case where only one management operation is supported by the terminal 101, the requested management operation may not be indicated in the request information, and the supported management operation is requested by default.

In some embodiments, the management operation requested by the terminal includes at least one of: enabling of the AI model or the AI functionality; disabling of the AI model or the AI functionality; or switching of the AI model or the AI functionality.

In some embodiments, the request information may also be referred to as a management request. For example, in the network-decided mode, the terminal 101 may send the request information to the network device 102.

In some embodiments, the network device 102 receives the request information, to learn the identifier of the first AI model or the first AI functionality that the terminal 101 requests to manage, and/or the management operation for the first AI model or the first AI functionality requested by the terminal 101.

In some embodiments, in a case where the first AI model or the first AI functionality does not match the identifier in the first indication information, the terminal 101 may not send the request information.

In step S2206, the network device 102 sends third indication information to the terminal 101.

In some embodiments, steps S2205 and S2206 correspond to the terminal behavior indicated by the first indication information.

In some embodiments, the third indication information indicates an identifier corresponding to a second AI model or a second AI functionality that the terminal is allowed to manage, and/or a management operation that the terminal is allowed to perform on the second AI model or the second AI functionality.

In some embodiments, the second AI model is the same as or different from the first AI model, or the second AI functionality is the same as or different from the first AI functionality. Optionally, the allowed management operation is the same as or different from an operation requested by the terminal 101. For example, the network device 102 indicates, via the third indication information, an identifier of enabling or disabling of the second AI model or the second AI functionality.

In some embodiments, the third indication information may also be referred to as the management indication.

In some embodiments, the terminal 101 receives the third indication information, and determines a management behavior allowed by the network device 102. In this embodiment, the terminal 101 needs to determine the model or the functionality to be managed (e.g., used) according to the management indication. In some embodiments, the terminal 101 receiving the third indication information belongs to the terminal's behavior determined by the terminal based on the first indication information.

In step S2207, the terminal 101 performs the management operation on the second AI model or the second AI functionality.

In some embodiments, a management of the terminal 101 may be performed according to an indication of the network device 102, for example, executing a management operation indicated by the third indication information.

In some embodiments, steps S2205 to S2207 correspond to the terminal behavior indicated by the first indication information.

The method involved in embodiments of the present disclosure may include at least one of step S2201 to step S2207; for example, the method includes step S2203, or the method includes steps S2203 to S2206.

In some embodiments, at least one of steps S2201 to S2202 is optional, and one or more of these steps may be omitted or replaced in different embodiments.

In some embodiments, at least one of steps S2204 to S2207 is optional, and one or more of these steps may be omitted or replaced in different embodiments.

In some embodiments, reference may be made to other optional implementations recorded before or after the specification corresponding to FIG. 2b.

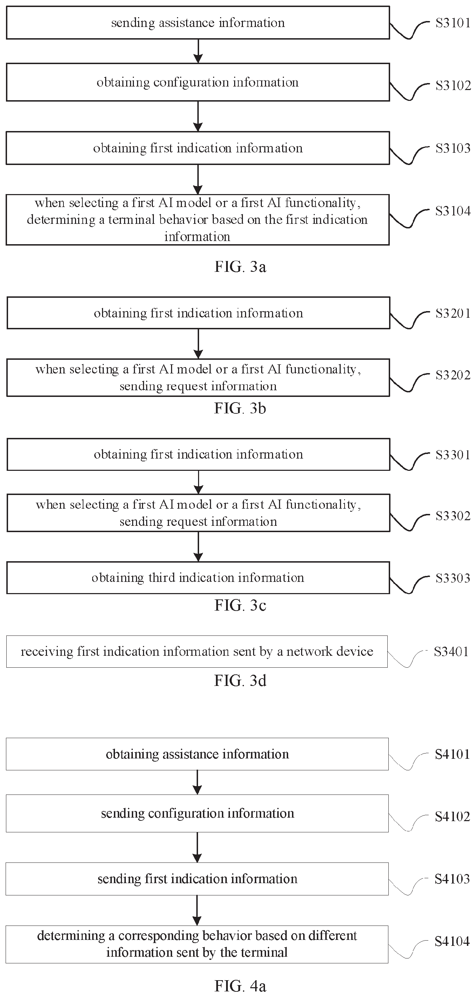

FIG. 3a is a schematic diagram illustrating a method for receiving and sending indication information according to embodiments of the present disclosure. As shown in FIG. 3a, embodiments of the present disclosure relate to a method for receiving and sending indication information, which is performed by a terminal 101. The method includes the following steps.

In step S3101, assistance information is sent.

In some embodiments, the implementation of step S3101 may refer to the optional implementations of step S2101, which will not be repeated here.

In step S3102, configuration information is obtained.

In some embodiments, the implementation of step S3102 may refer to the optional implementations of step S2102, which will not be repeated here.

In some embodiments, the terminal 101 may obtain the configuration information from a network device 102 or other entities.

In step S3103, first indication information is obtained.

In some embodiments, the implementation of step S3103 may refer to the optional implementations of step S2103, which will not be repeated here.

In some embodiments, the terminal 101 may obtain the first indication information from the network device 102 or other entities.

In step S3104, in a case where the terminal 101 selects a first AI model or a first AI functionality, a terminal behavior based on the first indication information is determined.

In some embodiments, the implementation of step S3104 may refer to the optional implementations of steps S2105 to S2106, which will not be repeated here.

In some embodiments, the implementation of step S3104 may refer to the optional implementations of steps S2205 to S2207, which will not be repeated here.

The method involved in embodiments of the present disclosure may include at least one of steps S3101 to S3104.

In some embodiments, reference may be made to other optional implementations described before or after the specification corresponding to FIG. 3a.

FIG. 3b is a schematic diagram illustrating a method for receiving and sending indication information according to embodiments of the present disclosure. As shown in FIG. 3b, embodiments of the present disclosure relate to a method for receiving and sending indication information, which is performed by a terminal 101. The method includes the following steps.

In step S3201, first indication information is obtained.

In some embodiments, the implementation of step S3201 may refer to the optional implementations of step S2103, which will not be repeated here.

In step S3202, in a case where the terminal 101 selects a first AI model or a first AI functionality, second indication information is sent.

In some embodiments, the implementation of step S3202 may refer to the optional implementations of steps S2104 to S2105, which will not be repeated here.

In some embodiments, reference may be made to other optional implementations described before or after the specification corresponding to FIG. 3b.

FIG. 3c is a schematic diagram illustrating a method for receiving and sending indication information according to embodiments of the present disclosure. As shown in FIG. 3c, embodiments of the present disclosure relate to a method for receiving and sending indication information, which is performed by a terminal 101. The method includes the following steps.

In step S3301, first indication information is obtained.

In some embodiments, the implementation of step S3301 may refer to the optional implementations of step S2103, which will not be repeated here.

In step S3302, in a case where the terminal 101 selects a first AI model or a first AI functionality, request information is sent.

In some embodiments, the implementation of step S3302 may refer to the optional implementations of steps S2204 to S2205, which will not be repeated here.

In step S3303, the terminal 101 obtains third indication information.

In some embodiments, the implementation of step S3303 may refer to the optional implementations of step S2206, which will not be repeated here.

In some embodiments, reference may be made to other optional implementations described before or after the specification corresponding to FIG. 3c.

FIG. 3d is a schematic diagram illustrating a method for receiving and sending indication information according to embodiments of the present disclosure. As shown in FIG. 3d, embodiments of the present disclosure relate to a method for receiving and sending indication information, which is performed by a terminal 101. The method includes the following steps.

In step S3401, first indication information sent by a network device 102 is received.

In some embodiments, the implementation of step S3401 may refer to the optional implementations of step S2103, which will not be repeated here.

In some embodiments, the first indication information includes at least one of:
an identifier of at least one AI model;
an identifier of at least one AI functionality; or
an identifier of at least one AI application scenario.

In some embodiments, at least one of the following is satisfied among an AI model, an AI functionality and an AI application scenario:
the AI functionality being associated with one or more AI models;
the AI application scenario being associated with one or more AI models; or
the AI application scenario being associated with one or more AI functionalities.

In some embodiments, the AI application scenario includes at least one of:
a beam management;
a beam measurement;
a channel state information (CSI) reporting;
a terminal positioning;
a mobility management; or
a radio resource measurement.

In some embodiments, the method further includes:
in a case where the terminal selects a first AI model or a first AI functionality, determining, by the terminal, the terminal behavior according to the first AI model or the first AI functionality and the first indication information, in which the first AI model is one of AI models supported by the terminal, or the first AI functionality is one of AI functionalities supported by the terminal.

In some embodiments, determining, by the terminal, the terminal behavior according to the first AI model or the first AI functionality and the first indication information includes:
in a case where the first AI model or the first AI functionality matches an identifier in the first indication information, sending, by the terminal, second indication information to the network device, in which the second indication information indicates an identifier corresponding to the first AI model or the first AI functionality, and/or a management operation on the first AI model or the first AI functionality.

In some embodiments, the method further includes:
performing, by the terminal, the management operation indicated by the second indication information on the first AI model or the first AI functionality.

In some embodiments, determining, by the terminal, the terminal behavior according to the first AI model or the first AI functionality and the first indication information includes:
in a case where the first AI model or the first AI functionality matches an identifier in the first indication information, sending, by the terminal, request information to the network device, in which the request information indicates an identifier corresponding to the first AI model or the first AI functionality, and/or a management operation requested by the terminal; and
receiving third indication information sent by the network device, in which the third indication information indicates an identifier corresponding to a second AI model or a second AI functionality that the terminal is allowed to manage, and/or a management operation that the terminal is allowed to perform on the second AI model or the second AI functionality,
in which the second AI model is the same as or different from the first AI model, or the second AI functionality is the same as or different from the first AI functionality.

In some embodiments, the method further includes:
performing, by the terminal, the management operation indicated by the third indication information on the second AI model or the second AI functionality.

In some embodiments, the management operation includes at least one of:
enabling of the AI model or the AI functionality;
disabling of the AI model or the AI functionality; or
switching of the AI model or the AI functionality.

In some embodiments, the method further includes:
sending assistance information to the network device, in which the assistance information includes a correspondence among an AI model, an AI functionality and an AI application scenario; or
receiving configuration information sent by the network device, in which the configuration information includes a correspondence among an AI model, an AI functionality and an AI application scenario.

In some embodiments, reference may be made to other optional implementations described before or after the specification corresponding to FIG. 3d.

FIG. 4a is a schematic diagram illustrating a method for receiving and sending indication information according to embodiments of the present disclosure. As shown in FIG. 4a, embodiments of the present disclosure relate to a method for receiving and sending indication information, which is performed by a network device 102. The method includes the following steps.

In step S4101, assistance information is obtained.

In some embodiments, the implementation of step S4101 may refer to the optional implementations of step S2101, which will not be repeated here.

In step S4102, configuration information is sent.

In some embodiments, the implementation of step S4102 may refer to the optional implementations of step S2102, which will not be repeated here.

In some embodiments, the network device 102 may send the configuration information to a terminal 101 or other entities.

In step S4103, first indication information is sent.

In some embodiments, the implementation of step S4103 may refer to the optional implementations of step S2103, which will not be repeated here.

In some embodiments, the network device 102 may send the first indication information to the terminal 101 or other entities.

In step S4104, a corresponding behavior is determined based on different information sent by the terminal 101.

In some embodiments, the implementation of step S4104 may refer to the optional implementations of steps S2105 to S2106, which will not be repeated here.

In some embodiments, the implementation of step S4104 may refer to the optional implementations of steps S2205 to S2207, which will not be repeated here.

The method involved in embodiments of the present disclosure may include at least one of steps S4101 to S4104.

In some embodiments, reference may be made to other optional implementations described before or after the specification corresponding to FIG. 4a.

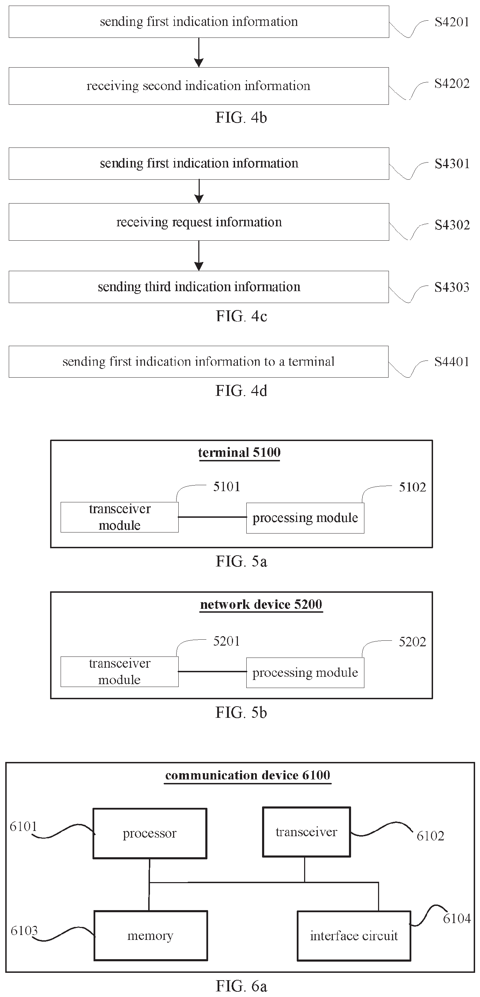

FIG. 4b is a schematic diagram illustrating a method for receiving and sending indication information according to embodiments of the present disclosure. As shown in FIG. 4b, embodiments of the present disclosure relate to a method for receiving and sending indication information, which is performed by a network device 102. The method includes the following steps.

In step S4201, first indication information is sent.

In some embodiments, the implementation of step S4201 may refer to the optional implementations of step S2103, which will not be repeated here.

In step S4202, second indication information is received.

In some embodiments, the implementation of step S4202 may refer to the optional implementations of steps S2104 to S2105, which will not be repeated here.

In some embodiments, reference may be made to other optional implementations described before or after the specification corresponding to FIG. 4b.

FIG. 4c is a schematic diagram illustrating a method for receiving and sending indication information according to embodiments of the present disclosure. As shown in FIG. 4c, embodiments of the present disclosure relate to a method for receiving and sending indication information, which is performed by a network device 102. The method includes the following steps.

In step S4301, first indication information is sent.

In some embodiments, the implementation of step S4301 may refer to the optional implementations of step S2103, which will not be repeated here.

In step S4302, request information is received.

In some embodiments, the implementation of step S4302 may refer to the optional implementations of steps S2204 to S2205, which will not be repeated here.

In step S4303, third indication information is sent.

In some embodiments, the implementation of step S4303 may refer to the optional implementations of step S2206, which will not be repeated here.

In some embodiments, reference may be made to other optional implementations described before or after the specification corresponding to FIG. 4c.

FIG. 4d is a schematic diagram illustrating a method for receiving and sending indication information according to embodiments of the present disclosure. As shown in FIG. 4d, embodiments of the present disclosure relate to a method for receiving and sending indication information, which is performed by a network device 102. The method includes the following steps.

In step S4401, first indication information is sent to a terminal 101.

In some embodiments, the implementation of step S4401 may refer to the optional implementations of step S2103, which will not be repeated here.

In some embodiments, the first indication information includes at least one of:
an identifier of at least one AI model;
an identifier of at least one AI functionality; or
an identifier of at least one AI application scenario.

In some embodiments, at least one of the following is satisfied among an AI model, an AI functionality and an AI application scenario:
the AI functionality being associated with one or more AI models;
the AI application scenario being associated with one or more AI models; or
the AI application scenario being associated with one or more AI functionalities.

In some embodiments, the AI application scenario includes at least one of:
a beam management;
a beam measurement;
a channel state information (CSI) reporting;
a terminal positioning;
a mobility management; or
a radio resource measurement.

In some embodiments, the method further includes:
receiving second indication information sent by the terminal, in which the second indication information is sent in a case where a first AI model or a first AI functionality matches an identifier in the first indication information; the second indication information indicates an identifier corresponding to the first AI model or the first AI functionality, and/or a management operation on the first AI model or the first AI functionality; and
in which the first AI model is one of AI models supported by the terminal, or the first AI functionality is one of AI functionalities supported by the terminal.

In some embodiments, the method further includes:
receiving request information sent by the terminal, in which the request information is sent in a case where a first AI model or a first AI functionality matches an identifier in the first indication information, and the request information indicates an identifier corresponding to the first AI model or the first AI functionality, and/or a management operation requested by the terminal; and
sending third indication information to the terminal, in which the third indication information indicates an identifier corresponding to a second AI model or a second AI functionality that the terminal is allowed to manage, and/or a management operation that the terminal is allowed to perform on the second AI model or the second AI functionality,
in which the second AI model is the same as or different from the first AI model, or the second AI functionality is the same as or different from the first AI functionality.

In some embodiments, the management operation includes at least one of:
enabling of the AI model or the AI functionality;
disabling of the AI model or the AI functionality; or
switching of the AI model or the AI functionality.

In some embodiments, the method further includes:
receiving assistance information sent by the terminal, in which the assistance information includes a correspondence among an AI model, an AI functionality and the AI application scenario; or
sending configuration information to the terminal, in which the configuration information includes a correspondence among an AI model, an AI functionality and an AI application scenario.

In some embodiments, reference may be made to other optional implementations described before or after the specification corresponding to FIG. 4d.

Embodiments of the present disclosure provide an AI management method, which enables a UE to reasonably manage an AI model or an AI functionality. To facilitate the understanding of the embodiments of the present disclosure, several specific examples are listed below.

### Example 1:

A UE receives a first indication sent by a network. In a case where the UE decides to manage a first AI model or a first functionality, the UE determines how to identify an AI model or an AI functionality to be used according to the first indication.

In some embodiments, the UE may correspond to the terminal 101 in the foregoing embodiments, and the network may correspond to the network device 102 in the foregoing embodiments.

In some embodiments, a first indication may correspond to the first indication information in the foregoing embodiments.

As an embodiment, a management operation includes enabling, disabling, switching of a model or a functionality.

### Example 2:

Based on Example 1, the first indication may be an identifier of the model or the functionality.

### Example 3:

Based on Example 1 or Example 2, if the model is a model determined in the first indication, the UE uses the first model or the first functionality, and sends a management indication to the network to indicate the first model or the first functionality and a management decision.

As an embodiment, the first indication may indicate one or more model identifiers. The UE determines whether to send the management indication according to whether the managed model matches the indicated model.

As an embodiment, the first indication may indicate one or more functionalities or application scenarios, and each functionality or application scenario is bound to one or more models. The UE determines whether to send the management indication according to whether the managed model matches the bound model.

In some embodiments, the correspondence between functionalities and models may be configured by the network, or may be determined by the UE itself.

### Example 4:

Based on Example 1 or Example 2, if the model is a model determined in the first indication, the UE sends a management request to the network, in which the request indicates the first model or the first functionality and the management decision.

As an embodiment, the first indication may indicate one or more model identifiers. The UE determines whether to send the management request according to whether the managed model matches the indicated model.

As an embodiment, the first indication may indicate one or more functionalities or application scenarios, and each functionality or application scenario is bound to one or more models. The UE determines whether to send the management request according to whether the managed model matches the bound model.

In some embodiments, the correspondence between functionalities and models may be configured by the network, or may be determined by the UE itself.

### Example 5:

Based on Example 4, after receiving the management indication sent by the network, the model or the functionality to be used is determined according to the management indication.

As an embodiment, the management indication includes an identifier of the model or the functionality that are enabled or disabled.

### Example 6:

Based on Example 1, the UE reports the correspondence between models and functionalities or application scenarios to the network.

Embodiments of the present disclosure further provide a device for implementing any of the above methods, for example, a device including units or modules for implementing the steps performed by the terminal in any of the above methods. For another example, another device is also provided, which includes units or modules for implementing the steps performed by the network device (such as an access network device, a core network function node, a core network device and the like) in any of the above methods.

It should be understood that the division of each unit or module in the above device is only a division of logical functions, which may be fully or partially integrated into a physical entity or physically separated in actual implementation. Moreover, the units or modules in the device may be implemented in the form of calling software by a processor: for example, the device includes a processor, which is connected with a memory, and instructions are stored in the memory, and the processor calls the instructions stored in the memory to implement any of the above methods or implement the functions of the units or modules of the device, in which the processor is a general-purpose processor, such as a central processing unit (CPU) or a microprocessor, and the memory is a memory in the device or a memory outside the device. Alternatively, the units or modules in the device may be implemented in the form of hardware circuits, and some or all of the functions of the units or modules may be implemented by designing the hardware circuits, which may be understood as one or more processors; for example, in an implementation, the above-mentioned hardware circuit is an application-specific integrated circuit (ASIC), and some or all of the functions of the above-mentioned units or modules are implemented by designing the logical relationship of elements in the circuit; for another example, in another implementation, the above hardware circuit may be implemented by a programmable logic device (PLD). Take a field programmable gate array (FPGA) as an example, it may include a large number of logic gates, and the connection relationship between the logic gates is configured by configuration files, implementing the functions of some or all of the above units or modules. All the units or modules of the above device may be implemented entirely in the form of calling software by the processor, or entirely in the form of hardware circuits, or partially in the form of calling software by a processor, and the rest is implemented in the form of hardware circuits.

In the embodiments of the present disclosure, the processor is a circuit with signal processing capability. In an implementation, the processor may be a circuit with instruction reading and running capability, such as a central processing unit (CPU), a microprocessor, a graphics processing unit (GPU) (which may be understood as a microprocessor), or a digital signal processor (DSP). In another implementation, the processor may realize certain functions through the logical relationship of hardware circuits, which are fixed or reconfigurable. For example, the processor is a hardware circuit implemented by an application-specific integrated circuit (ASIC) or a programmable logic device (PLD), such as an FPGA. In the reconfigurable hardware circuit, the process that the processor loads the configuration document to implement the hardware circuit configuration may be understood as the process that the processor loads instructions to implement the functions of some or all of the above units or modules. Furthermore, it may also be a hardware circuit designed for artificial intelligence, which may be understood as the ASIC, such as neural network processing unit (NPU), tensor processing unit (TPU), deep learning processing unit (DPU) and so on.

FIG. 5a is a block diagram illustrating a terminal according to embodiments of the present disclosure. As shown in FIG. 5a, a terminal 5100 may include at least one of a transceiver module 5101, a processing module 5102, and the like. In some embodiments, the transceiver module 5101 is configured to receive first indication information sent by a network device, in which the first indication information indicates a terminal behavior of the terminal for managing an AI model or an AI functionality.

Optionally, the transceiver module 5101 is configured to perform at least one of the communication steps such as sending and/or receiving performed by the terminal 101 in any of the foregoing methods, which will not be repeated here. Optionally, the processing module 5102 is configured to perform at least one of the other steps performed by the terminal 101 in any of the foregoing methods, which will not be repeated here.

FIG. 5b is a block diagram illustrating a terminal according to embodiments of the present disclosure. As shown in FIG. 5b, a network device 5200 may include at least one of a transceiver module 5201, a processing module 5202, or the like. In some embodiments, the transceiver module 5201 is configured to send first indication information to a terminal, in which the first indication information indicates a terminal behavior of the terminal for managing an AI model or an AI functionality.

In some embodiments, the transceiver module 5201 is configured to perform at least one of the communication steps such as sending and/or receiving performed by the network device 102 in any of the foregoing methods, which will not be repeated here. Optionally, the processing module 5202 is configured to perform at least one of the other steps executed by the network device 102 in any of the foregoing methods, which will not be repeated here.

In some embodiments, the transceiver module may include a sending module and/or a receiving module, and the sending module and the receiving module may be separate or integrated together. Optionally, the transceiver module may be interchangeable with a transceiver.

In some embodiments, the processing module may be a single module, or may include multiple sub-modules. Optionally, the multiple sub-modules perform all or part of the steps required to be performed by the processing module. Optionally, the processing module may be interchangeable with a processor.

FIG. 6a is a schematic diagram illustrating a communication device 6100 according to embodiments of the present disclosure. The communication device 6100 may be a communication device (e.g., an access network device, a core network device, etc.), may also be a terminal (e.g., user equipment, etc.), may further be a chip, a chip system, a processor or the like that supports the network device to implement any of the foregoing methods, or may be a chip, a chip system, a processor or the like that supports the terminal to implement any of the above methods. The communication device 6100 may be used to implement the methods described in the above method embodiments, and for details, reference may be made to the descriptions in the above method embodiments.

As shown in FIG. 6a, the communication device 6100 includes one or more processors 6101. The processor 6101 may be a general-purpose processor or a special-purpose processor, for example, a baseband processor or a central processing unit. The baseband processor may be used to process communication protocols and communication data, and the central processor may be used to control communication devices (such as a base station, a baseband chip, a terminal, a terminal chips, a DU or a CU, etc.), execute programs, and process program data. Optionally, the communication device 6100 is configured to perform any one of the above methods. Optionally, one or more processors 6101 are configured to invoke instructions to cause the communication device 6100 to perform any of the above methods.

In some embodiments, the communication device 6100 further includes one or more transceivers 6102. In a case where the communication device 6100 includes one or more transceivers 6102, communication steps such as sending and receiving in the above methods are performed by the transceiver 6102, and other steps are performed by the processor 6101. In an optional embodiment, the transceiver may include a receiver and/or a transmitter, which may be separate or integrated. Optionally, terms such as transceiver, transceiver unit, transceiving machine, transceiver circuit and the like may be replaced with each other, terms such as transmitter, transmitting unit, transmitting machine, transmitting circuit and the like may be replaced with each other, and terms such as receiver, receiving unit, receiving machine, receiving circuit and the like may be replaced with each other.

In some embodiments, the communication device 6100 further includes one or more memories 6103 for storing instructions. Optionally, all or part of the memories 6103 may also be located outside the communication device 6100. In an optional embodiment, the communication device 6100 further includes one or more interface circuits 6104. Optionally, the interface circuit 6104 is connected to the memory 6103. The interface circuit 6104 may be used to receive signals from the memory 6103 or other devices, and may be used to send signals to the memory 6103 or other devices. For example, the interface circuit 6104 may read data stored in the memory 6103 and send the data to the processor 6101.

The communication device 6100 described in the above embodiments may be a network device or a terminal, but the scope of the communication device 6100 described in the present disclosure is not limited thereto. The structure of the communication device 6100 may not be limited by FIG. 6a. The communication device may be a stand-alone device or may be part of a larger device. For example, the communication device may be: 1) a stand-alone integrated circuit (IC), or a chip, or a chip system or subsystem; 2) a set of one or more ICs, in which optionally, the set of ICs may also include a storage component for storing data and programs; 3) an ASIC, such as a modem; 4) a module that may be embedded in other devices; (5) a receiver, a terminal device, an intelligent terminal device, a cellular phone, a wireless device, a handheld device, a mobile unit, an in-vehicle device, a network device, a cloud device, an artificial intelligence device, etc.; (6) others.

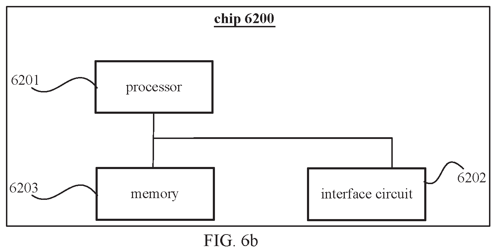

FIG. 6b is a schematic diagram illustrating a communication device according to embodiments of the present disclosure. In a case where the communication device 6100 may be a chip or a chip system, please refer to the block diagram of the chip 6200 shown in FIG. 6b, but it is not limited to this.

The chip 6200 includes one or more processors 6201. The chip 6200 is configured to perform any of the above methods.

In some embodiments, the chip 6200 further includes one or more interface circuits 6202. Optionally, terms such as interface circuit, interface, transceiver pin, transceiver and the like may be replaced with each other. In some embodiments, the chip 6200 further includes one or more memories 6203 for storing instructions. Optionally, all or part of the memories 6203 may be located outside the chip 6200. The chip 6200 is connected to the memory 6203. The interface circuit 6202 may further be configured to receive a signal from the memory 6203 or other devices, and the interface circuit 6202 may be configured to send a signal to the memory 6203 or other devices. For example, the interface circuit 6202 may read instructions stored in the memory 6203 and send the instructions to the processor 6201.

In some embodiments, the interface circuit 6202 is configured to perform at least one of the communication steps such as sending and/or receiving performed by in the foregoing method. That the interface circuit 6202 is configured to perform at least one of the communication steps such as sending and/or receiving performed by in the foregoing method specifically means, for example: the interface circuit 6202 performs data interaction between the processor 6201, the chip 6200, the memory 6203 or the transceiver component. In some embodiments, the processor 6201 performs at least one of the remaining steps.

All modules and/or components described in the respective embodiments of the virtual apparatus, physical apparatus, chip, etc. may be arbitrarily combined or separated as appropriate. Optionally, part or all of the steps may also be executed by a plurality of modules and/or components in cooperation, which is not limited in the embodiments of the present disclosure.

The present disclosure further provides a storage medium on which instructions are stored, which, when executed on the communication device 6100, cause the communication device 6100 to perform any of the above methods. Optionally, the storage medium is an electronic storage medium. Optionally, the storage medium is a computer-readable storage medium, but it is not limited to this, and it may also be a storage medium readable by other devices. Optionally, the storage medium may be a non-transitory storage medium, but it is not limited to this, and it may also be a temporary storage medium.

The present disclosure further provides a program product which, when executed by the communication device 6100, causes the communication device 6100 to perform any of the above methods. In some embodiments, the program product is a computer program product.

The present disclosure further provides a computer program that, when run on a computer, causes the computer to perform any of the above methods.

### INDUSTRIAL APPLICABILITY

By receiving first indication information, a terminal learns a UE behavior indicated by a network device, such that adaptive operations may be performed during a process of managing an AI model or an AI functionality by the terminal, which facilitates improving the rationality of the terminal in managing the AI model or the AI functionality under the condition of reaching a consensus through negotiation with the network device.

## Claims

1. A method for receiving indication information, performed by a terminal, comprising:
receiving first indication information sent by a network device, wherein the first indication information indicates a terminal behavior of the terminal for managing an artificial intelligence (AI) model or an AI functionality.

2. The method according to claim 1, wherein the first indication information comprises at least one of:
an identifier of at least one AI model;
an identifier of at least one AI functionality; or
an identifier of at least one AI application scenario.

3. The method according to claim 2, wherein at least one of the following is satisfied among an AI model, an AI functionality and an AI application scenario:
the AI functionality being associated with one or more AI models;
the AI application scenario being associated with one or more AI models; or
the AI application scenario being associated with one or more AI functionalities.

4. The method according to claim 2, wherein the AI application scenario comprises at least one of:
a beam management;
a beam measurement;
a channel state information (CSI) reporting;
a terminal positioning;
a mobility management; or
a radio resource measurement.

5. The method according to any one of claims 1 to 4, further comprising:
in a case where the terminal selects a first AI model or a first AI functionality, determining, by the terminal, the terminal behavior according to the first AI model or the first AI functionality and the first indication information, wherein the first AI model is one of AI models supported by the terminal, or the first AI functionality is one of AI functionalities supported by the terminal.

6. The method according to claim 5, wherein determining, by the terminal, the terminal behavior according to the first AI model or the first AI functionality and the first indication information comprises:
in a case where the first AI model or the first AI functionality matches an identifier in the first indication information, sending, by the terminal, second indication information to the network device, wherein the second indication information indicates an identifier corresponding to the first AI model or the first AI functionality, and/or a management operation on the first AI model or the first AI functionality.

7. The method according to claim 6, further comprising:
performing, by the terminal, the management operation indicated by the second indication information on the first AI model or the first AI functionality.

8. The method according to claim 5, wherein determining, by the terminal, the terminal behavior according to the first AI model or the first AI functionality and the first indication information comprises:
in a case where the first AI model or the first AI functionality matches an identifier in the first indication information, sending, by the terminal, request information to the network device, wherein the request information indicates an identifier corresponding to the first AI model or the first AI functionality, and/or a management operation requested by the terminal; and
receiving third indication information sent by the network device, wherein the third indication information indicates an identifier corresponding to a second AI model or a second AI functionality that the terminal is allowed to manage, and/or a management operation that the terminal is allowed to perform on the second AI model or the second AI functionality,
wherein the second AI model is the same as or different from the first AI model, or the second AI functionality is the same as or different from the first AI functionality.

9. The method according to claim 8, further comprising:
performing, by the terminal, the management operation indicated by the third indication information on the second AI model or the second AI functionality.

10. The method according to any one of claims 6 to 9, wherein the management operation comprises at least one of:
enabling of the AI model or the AI functionality;
disabling of the AI model or the AI functionality; or
switching of the AI model or the AI functionality.

11. The method according to any one of claims 1 to 4, further comprising:
sending assistance information to the network device, wherein the assistance information comprises a correspondence among an AI model, an AI functionality and an AI application scenario; or
receiving configuration information sent by the network device, wherein the configuration information comprises a correspondence among an AI model, an AI functionality and an AI application scenario.

12. A method for sending indication information, performed by a network device, comprising:
sending first indication information to a terminal, wherein the first indication information indicates a terminal behavior of the terminal for managing an artificial intelligence (AI) model or an AI functionality.

13. The method according to claim 12, wherein the first indication information comprises at least one of:
an identifier of at least one AI model;
an identifier of at least one AI functionality; or
an identifier of at least one AI application scenario.

14. The method according to claim 13, wherein at least one of the following is satisfied among an AI model, an AI functionality and an AI application scenario:
the AI functionality being associated with one or more AI models;
the AI application scenario being associated with one or more AI models; or
the AI application scenario being associated with one or more AI functionalities.

15. The method according to claim 13, wherein the AI application scenario comprises at least one of:
a beam management;
a beam measurement;
a channel state information (CSI) reporting;
a terminal positioning;
a mobility management; or
a radio resource measurement.

16. The method according to any one of claims 12 to 15, further comprising:
receiving second indication information sent by the terminal, wherein the second indication information is sent in a case where a first AI model or a first AI functionality matches an identifier in the first indication information; the second indication information indicates an identifier corresponding to the first AI model or the first AI functionality, and/or a management operation on the first AI model or the first AI functionality; and
wherein the first AI model is one of AI models supported by the terminal, or the first AI functionality is one of AI functionalities supported by the terminal.

17. The method according to any one of claims 12 to 15, further comprising:
receiving request information sent by the terminal, wherein the request information is sent in a case where a first AI model or a first AI functionality matches an identifier in the first indication information, and the request information indicates an identifier corresponding to the first AI model or the first AI functionality, and/or a management operation requested by the terminal; and
sending third indication information to the terminal, wherein the third indication information indicates an identifier corresponding to a second AI model or a second AI functionality that the terminal is allowed to manage, and/or a management operation that the terminal is allowed to perform on the second AI model or the second AI functionality,
wherein the second AI model is the same as or different from the first AI model, or the second AI functionality is the same as or different from the first AI functionality.

18. The method according to any one of claims 16 to 17, wherein the management operation comprises at least one of:
enabling of the AI model or the AI functionality;
disabling of the AI model or the AI functionality; or
switching of the AI model or the AI functionality.

19. The method according to any one of claims 12 to 15, further comprising:
receiving assistance information sent by the terminal, wherein the assistance information comprises a correspondence among an AI model, an AI functionality and the AI application scenario; or
sending configuration information to the terminal, wherein the configuration information comprises a correspondence among an AI model, an AI functionality and an AI application scenario.

20. A terminal, comprising:
a transceiver module configured to receive first indication information sent by a network device, wherein the first indication information indicates a terminal behavior of the terminal for managing an artificial intelligence (AI) model or an AI functionality.

21. A network device, comprising:
a transceiver module configured to send first indication information to a terminal, wherein the first indication information indicates a terminal behavior of the terminal for managing an artificial intelligence (AI) model or an AI functionality.

22. A terminal, comprising:
one or more processors,
wherein the terminal is configured to perform the method according to any one of claims 1 to 11.

23. A network device, comprising:
one or more processors,
wherein the network device is configured to perform the method according to any one of claims 12 to 19.

24. A communication system, comprising a terminal and a network device, wherein
the terminal is configured to implement the method according to any one of claims 1 to 11; and
the network device is configured to implement the method according to any one of claims 12 to 19.

25. A storage medium storing instructions that, when executed on a communication device, cause the communication device to perform the method according to any one of claims 1 to 11 or 12 to 19.
